Europäisches Patentamt

European Patent Office

Office européen des brevets

(11) Veröffentlichungsnummer: **0 298 339 B1**

(19)

(12) **EUROPÄISCHE PATENTSCHRIFT**

(45) Veröffentlichungstag der Patentschrift: **11.11.92**

(21) Anmeldenummer: **88110257.8**

(22) Anmeldetag: **28.06.88**

(51) Int. Cl.⁵: **B29C 51/36**, B29C 51/26, B29C 67/22

(54) **Verfahren und Vakuumformwerkzeug zum Herstellen eines mit einem textilen Bezug versehenen Polsters, insbesondere Fahrzeugsitzpolsters.**

(30) Priorität: **07.07.87 DE 3722321**

(43) Veröffentlichungstag der Anmeldung:
**11.01.89 Patentblatt 89/02**

(45) Bekanntmachung des Hinweises auf die
Patenterteilung:
**11.11.92 Patentblatt 92/46**

(84) Benannte Vertragsstaaten:
**BE DE ES FR GB IT SE**

(56) Entgegenhaltungen:
**DE-A- 2 428 578**
**DE-B- 1 120 119**
**DE-C- 3 613 879**
**NL-A- 7 013 880**

(73) Patentinhaber: **BAYER AG**

**W-5090 Leverkusen 1 Bayerwerk(DE)**

(72) Erfinder: **Busch, Ralf Dr.**
**Schönauer Strasse 1**
**W-6834 Ketsch(DE)**
Erfinder: **Onnenberg, Volker Dipl.-Ing.**
**Schässburger Gasse 2**
**W-5276 Drabenderhöhe(DE)**

## Beschreibung

Die Erfindung betrifft ein Verfahren und ein Vakuumformwerkzeug zum Herstellen eines mit einem textilen Bezug versehenen Polsters, insbesondere Fahrzeugsitzpolsters, durch Hinterschäumen, wobei der Bezug auf den Rand eines zumindest teilweise einen Formhohlraum enthaltenden Vakuumformwerkzeugteils aufgelegt und gespannt wird, bevor an den Formhohlraum Vakuum angelegt und der Bezug angesaugt und positioniert wird, und anschließend ein Schaumstoff bildendes Reaktionsgemisch auf die Rückseite des Bezuges aufgegeben und nach dem Aushärten dieses Reaktionsgemisches zum Schaumstoffkern das Polster entformt wird (siehe: DE-C-3 613 879).

Beim Positionieren und Fixieren des Bezuges auf dem den Formhohlraum umgebenden Rand mittels eines Spannrahmens hängt der Bezug häufig unkontrollierbar in den Formhohlraum durch. Dadurch besteht die Gefahr von Faltenbildung. Ist der Bezug auf der Sichtseite gemustert oder besteht er aus zusammengefügten verschiedenfarbigen oder gemusterten und ungemusterten Abschnitten, so kann ein ungenaues Positionieren im Formhohlraum zu einem irreparablen Ausschußteil führen, weil ein solcher ins Auge fallender Schönheitsfehler vom Kunden nicht akzeptiert wird.

Es besteht die Aufgabe, ein Verfahren und ein Vakuumformwerkzeug zu schaffen, womit sich Faltenbildung bei der Herstellung solcher Polster vermeiden läßt und insbesondere ein genaues und reproduzierbares Positionieren von Bezügen mit gemusterten und ungemusterten oder verschiedenfarbigen Abschnitten in exakter Weise gewährleistet ist.

Gelöst wird diese Aufgabe dadurch, daß vor dem Anlegen von Vakuum an den Formhohlraum der Bezug in seiner Positionierung über dem Formhohlraum mit mindestens einem bewegbaren Teil der Wandung des Formhohlraumes in Berührung gebracht, an diesem Teil fixiert und dann das Teil mit dem daran fixierten Bezug in die formgebende Position gefahren wird, wobei spätestens jetzt Vakuum an den Formhohlraum angelegt wird.

Dadurch wird erreicht, daß der Bezug, da er nicht durchhängt, exakt auf dem hochgefahrenen Teil der Wandung des Formhohlraumes positioniert werden kann und sich auch nach dem Fixieren nicht mehr verzieht. Bei einem Formwerkzeug zum Herstellen von Fahrzeugsitzpolstern bietet es sich beispielsweise an, die Wandung des Formhohlraumes entsprechend dem Sitzspiegel als bewegbares Teil zu gestalten, weil dessen Begrenzungen in der Regel gleichzeitig Grenzlinien für gemusterte und ungemusterte bzw. verschiedenfarbige Bezugabschnitte darstellen. Die Nähte zwischen den einzelnen Bezugabschnitten dienen dann als Markierung und man kann mit der Hand leicht nachfühlen, ob die Nähte mit den Seitenrändern des bewegbaren Teils der Wandung übereinstimmen. Besteht eine solche Größenübereinstimmung zwischen einem bewegbaren Teil und einem exponierten Abschnitt des Polsters nicht, so ist es zweckmäßig, auf dem Bezug rückseitig Markierungen vorzusehen, beispielsweise in Form eines optisch abtastbaren Aufdruckes oder in Form von Ösen, bevorzugt an den Bezugecken, oder Keder. Solche Ösen oder Keder dienen als Greif- bzw. Positionierhilfen und sind besonders günstig, wenn der Bezugzuschnitt automatisch erfaßt und aufgelegt wird. Im Rahmen des Erfindungsgedankens ist es natürlich auch möglich, einen Teil der Wandung des Formhohlraumes zu fixieren und den restlichen Teil des gesamten Vakuumformwerkzeugteils bewegbar zu gestalten.

Die Fixierung des Bezuges an dem bewegbaren Teil erfolgt gemäß einer ersten Ausführungsform des neuen Verfahrens durch Vakuum.

Gemäß einer zweiten Ausführungsform erfolgt die Fixierung mittels eines Oberstempels.

Die Verwendung von Vakuum dürfte die zweckmäßigere Lösung sein, weil ohnehin ein Vakuumanschluß vorhanden sein muß und der apparative Aufwand deshalb geringer ist. Außerdem hat das Bedienungspersonal in diesem Fall eine bessere Sicht auf den Bezug, weil kein Oberstempel vorhanden ist.

Selbstverständlich ist auch eine Kombination beider Varianten möglich. Sie könnte bei sehr luftdurchlässigen Bezugstoffen vorteilhaft sein. Es versteht sich, daß der Oberstempel zurückgezogen werden muß, bevor das schäumfähige Reaktionsgemisch eingebracht wird.

Vorzugsweise wird mindestens ein weiteres bewegbares Teil der Wandung des Formhohlraumes auf ein vorgegebenes, jedoch niedrigeres Niveau als das erste Teil plaziert und, nachdem das erste Teil einen vorbestimmten Weg zurückgelegt hat, wird der Bezug auch am zweiten Teil fixiert und dieses zweite Teil ebenfalls in seine formgebende Position gefahren.

Auf diese Weise läßt sich bei kompliziert gestalteten Formhohlräumen der Bezug beim Einziehen in einem möglichst großen Bereich fixiert halten, was das Anlegen an die restliche Wandung des Formhohlraumes begünstigt. Es versteht sich, daß auch mehr als zwei bewegbare Teile verwendet werden können und insbesondere können Teile gleichzeitig betätigt werden, und zwar vorzugsweise dann, wenn sie parallel angeordnet sind. Dem Fachmann ist also eine große Anpassungsmöglichkeit des Verfahrensdablaufes an die Geometrie des Formhohlraumes gegeben.

Gemäß einer weiteren besonderen Ausführungsform wird die Bewegungsgeschwindigkeit mindestens eines der Teile gesteuert.

Dadurch ist es möglich, das Nachgleiten des Bezugstoffes so zu beeinflussen, daß dieser Gelegenheit hat, sich überall an die Wandung des Formhohlraumes voll anzulegen. Gegebenenfalls ist es zweckmäßig, je nach Steifigkeit des Bezugstoffes, die optimale Änderung der Bewegungsgeschwindigkeit bzw. die optimale Bewegungsgeschwindigkeit selbst durch Versuche zu ermitteln.

Erforderlichenfalls wird die Bewegung mindestens eines der Teile kurzzeitig unterbrochen.

Diese Maßnahme kann insbesondere dann zweckmäßig sein, wenn bereits während der Bewegung des bzw. der Teile(s) an den restlichen Formhohlraum Vakuum angelegt wird. Dann nämlich kann sich der Bezug in gewünschten Bereichen der Formhohlraumwandung eher anlegen als in anderen, wodurch sich, je nach der Kontur des Formhohlraumes, eine Überdehnung des Bezuges vermeiden läßt.

Eine weitere Möglichkeit der Eingriffnahme besteht darin, daß die Fixierung auf dem bewegbaren Teil - ähnlich wie beim Spannrahmen - zeitweise etwas gelockert wird, so daß der Bezug auch nachgleiten bzw. sich dehnen kann.

Das neue Vakuumformwerkzeug zum Herstellen eines mit einem textilen Bezug versehen Polsters, insbesondere Fahrzeugsitzpolsters, durch Hinterschäumen, geht aus von einem den Formhohlraum zumindest teilweise enthaltenden Vakuumformwerkzeugteil, wobei der Formhohlraum der Kontur des zu fertigenden Polsters entspricht, eine perforierte Wandung aufweist und an eine Vakuumquelle anschließbar ist und wobei den Formhohlraum umgebenden Rand ein Spannrahmen zugeordnet ist.

Das Neue ist darin zu sehen, daß ein Teil der Wandung des Formhohlraumes aus mindestens einem zur Oberfläche des Vakuumformwerkzeugteils hin bewegbaren Teil besteht, welchem eine Fixiervorrichtung zugeordnet ist.

Die Funktion wurde bereits im Zusammenhang mit dem neuen Verfahren beschrieben. Es versteht sich, daß man zur Bewegbarkeit vorzugsweise einen hydraulischen Antrieb vorsehen wird, weil dies die eleganteste und zweckmäßigste Ausführungsform sein dürfte. Selbstverständlich ist auch ein mechanischer, pneumatischer oder gegebenenfalls auch ein elektromagnetischer Antrieb möglich.

Als Fixiervorrichtung bieten sich insbesondere zwei Varianten an:
Gemäß einer Variante besteht die Fixiervorrichtung aus einer Perforation des bewegbaren Teils mit Anschluß an eine Vakuumquelle.

Die Vorteile dieser Ausführungsform wurden bereits im Zusammenhang mit dem neuen Verfahren diskutiert.

Gemäß der anderen Variante besteht die Fixiervorrichtung aus einem sich mit dem bewegbaren Teil mitbewegbaren Oberstempel.

An sich ist diese Ausführungsform weniger günstig, weil das Bedienungspersonal den Einziehvorgang nur schlecht beobachten kann. Sinnvoll ist sie allerdings insbesondere dann, wenn dieser Oberstempel so ausgebildet ist, daß er den Bezugabschnitt auch von einem Vorratsstapel greifen, über den Formhohlraum transportieren und sowohl auf dem Rand als auch auf dem bewegbaren Teil positionieren kann.

Besonders vorteilhaft ist es, ein Programmsteuergerät für den Bewegungsablauf und die Fixierung vorzusehen.

Vorausgesetzt, daß der Bezug exakt aufgelegt wird, bietet das Programmsteuergerät eine optimale Hilfe für die Reproduzierbarkeit des optimalen Einziehvorganges für den Bezug in den Formhohlraum.

In der Zeichnung ist das neue Vakuumformwerkzeug in einem Ausführungsbeispiel rein schematisch im Schnitt dargestellt und nachstehend näher erläutert. Es zeigen:

Fig. 1 das Vakuumformwerkzeugteil mit dem Bezug in seiner Position vor dem Einziehen in den Formhohlraum und

Fig. 2 das Vakuumformwerkzeugteil mit in den Formhohlraum eingezogenem Bezug.

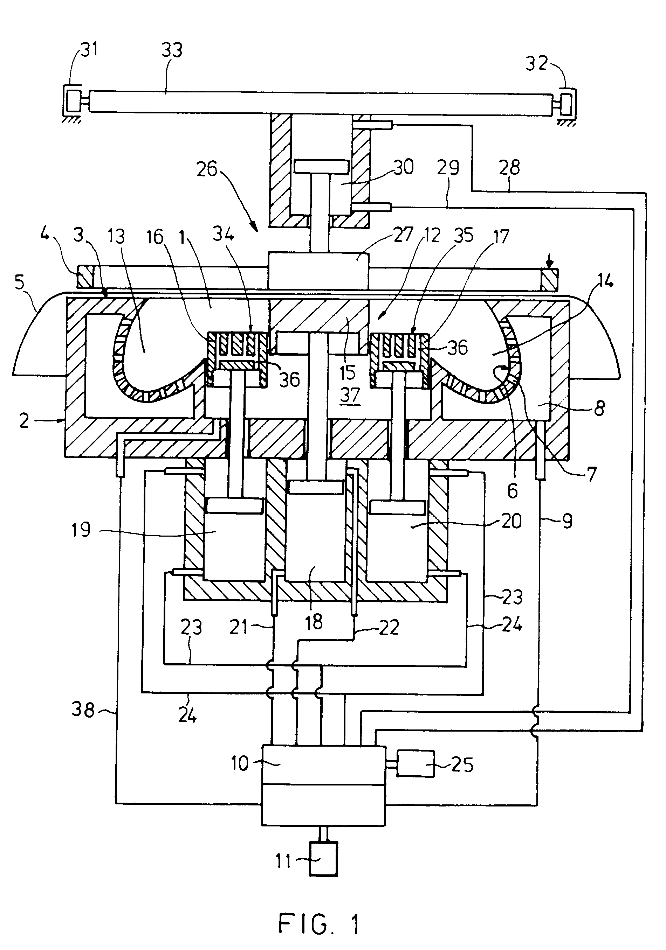

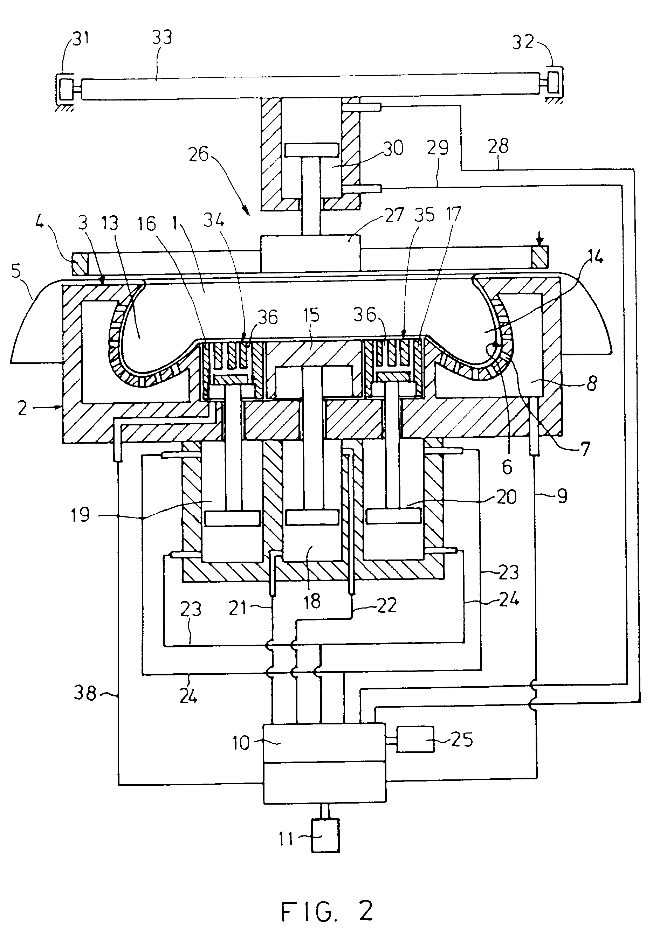

In Fig. 1, 2 besteht das Vakuumformwerkzeug aus einem den Formhohlraum 1 enthaltenden Vakuumformwerkzeugteil 2 und einem nicht dargestellten Deckel. Dem den Formhohlraum 1 umgebenden Rand 3 ist ein Spannrahmen 4 zugeordnet. Dieser drückt einen über den Formhohlraum 1 bzw. über den Rand 3 gelegten Bezug 5 mit geringer Kraft gegen den Rand 3, so daß der Bezug 5 gebremst nachgleiten kann. Die Wandung 6 - worunter auch der Boden des Formhohlraumes 1 zu verstehen ist - des Formhohlraumes 1 weist eine Perforation 7 in Form von Kanälen auf, welche den Formhohlraum 1 mit einer hinter der Wandung 6 angeordneten Saugkammer 8 verbindet. Diese wiederum ist über eine Saugleitung 9 mit einem Programmsteuergerät 10 und einer Vakuumquelle 11 verbunden. Der Formhohlraum 1 ist für die Fertigung eines Autositzpolsters gestaltet und läßt sich dementsprechend in einen Sitzspiegelabschnitt 12 und zwei Wangenabschnitte 13, 14 aufgliedern. Dem Sitzspiegelabschnitt 12 entsprechend ist die Wandung 6 in diesem Bereich durch drei bewegbare Teile 15, 16, 17 gebildet, von denen die Teile 16 und 17 beidseitig zum Teil 15 angeordnet sind und auch funktionsmäßig parallel arbeiten. Alle drei Teile 15, 16, 17 sind mit hydraulischen Antrieben 18, 19, 20 versehen, von denen die Antriebe 19 und 20 parallel arbeiten. Der hydraulische Antrieb 18 ist mit Leitungen 21, 22 und die hydraulischen Antriebe 19 und 20 sind über sich verzweigende Leitungen 23, 24 mit einem schematisch angedeuteten Programmsteuergerät 10 verbunden, welches u.a. nicht dargestellte Schaltventile enthält und seinerseits mit einer Hydraulikpumpe 25 verbunden ist. Dem bewegbaren Teil 15 ist eine Fixiervorrichtung 26 zugeordnet, welche aus einem sogenannten Oberstempel besteht, welcher ebenfalls einen über Leitungen 28, 29 mit dem Programmsteuergerät 10 verbundenen, hydraulischen Antrieb 30 aufweist. Diese Fixiervorrichtung 26 ist an einem in Schienen 31, 32 verfahrbaren Support 33 befestigt. Die Fixiervorrichtungen 34, 35 der Teile 16, 17 bestehen jeweils aus einer Perforation 36 in Form von Kanälen, welche den Formhohlraum 1 mit der hinter den Teilen 15, 16, 17 gelegenen Kammer 37 verbinden. Diese Kammer 37 ist über eine Saugleitung 38 mit dem Programmsteuergerät 10 verbunden.

Die Arbeitsweise dieses Vakuumformwerkzeuges bzw. der Verfahrensablauf zur Herstellung eines Autositzpolsters in diesem Formwerkzeug sind wie folgt:

Die Support 33 ist aus dem Bereich des Formhohlraumes 1 herausgefahren, der Spannrahmen 4 ist abgehoben und die bewegbaren Teile 15, 16, 17 befinden sich in der in Fig. 1 dargestellten Position. Ein Bezug 5 wird auf den Rand 3 und das Teil 15 aufgelegt, exakt plaziert und mittels des Spannrahmens 4 gespannt. Mittels des Oberstempels 27 wird der Bezug 5 auf dem Teil 15 ebenfalls fixiert. Anschließend wird das bewegbare Teil 15 zusammen mit dem Oberstempel 27 abgesenkt. Hat das Teil 15 das Niveau der Teile 16 und 17 erreicht, wird deren pneumatische Fixiervorrichtung 34, 35 betätigt, wodurch der Bezug angesaugt und fixiert wird. Die Teile 16 und 17 bewegen sich nun gleichzeitig mit dem Teil 15 in ihre formgebende Stellung. Gleichzeitig mit der Abwärtsbewegung aller drei Teile 15, 16, 17 wird auch an den restlichen Formhohlraum 1 Vakuum angelegt. Mit dem Erreichen der Endposition der Teile 15, 16, 17, wie sie in Fig. 2 dargestellt ist, legt sich der Bezug 5 überall vollständig an die Wandung 6 an. Nun wird der Oberstempel 27 hochgefahren, die Fixiervorrichtung 26 mittels des Supportes 33 aus dem Bereich des Formhohlraumes 1 herausgefahren, ein Polyurethan-Weichschaumstoff bildendes Reaktionsgemisch auf die Rückseite des Bezuges 5 in vorbestimmter Menge aufgegeben und der Formhohlraum 1 mittels eines Deckels verschlossen. Nach dem Aushärten des Reaktionsgemisches zu einem Weichschaumstoffkern wird das Polster entformt und der nächste Fertigungszyklus kann beginnen.

**Patentansprüche**

1. Verfahren zum Herstellen eines mit einem textilen Bezug (5) versehenen Polsters, insbesondere Fahrzeugsitzpolsters, durch Hinterschäumen, wobei der Bezug (5) auf dem Rand (3) eines einen Formhohlraum (1) zumindest teilweise enthaltenden Vakuumformwerkzeugteils (2) aufgelegt und gespannt wird, bevor an den Formhohlraum (1) Vakuum angelegt und der Bezug (5) angesaugt und positioniert wird, und anschließend ein Schaumstoff bildendes Reaktionsgemisch auf die Rückseite des Bezuges (5) aufgegeben und nach dem Aushärten des Reaktionsgemisches zum Schaumstoffkern das Polster entformt wird, dadurch gekennzeichnet, daß vor dem Anlegen von Vakuum an den Formhohlraum (1) der Bezug (5) bei seiner Positionierung über dem Formhohlraum (1) mit mindestens einem bewegbaren Teil (15, 16, 17) der Wandung (6) des Formhohlraumes (1) in Berührung gebracht, an diesem Teil (15, 16, 17) fixiert und dann das Teil (16, 16, 17) mit dem daran fixierten Bezug (5) in die formgebende Position gefahren wird, wobei spätestens jetzt Vakuum an den Formhohlraum (1) angelegt wird.

2. Verfahren nach Anspruch 1, dadurch gekennzeichnet, daß die Fixierung des Bezuges (5) an dem bewegbaren Teil (16, 17) durch Vakuum erfolgt.

3. Verfahren nach Anspruch 1, dadurch gekennzeichnet, daß die Fixierung des Bezuges (5) an dem bewegbaren Teil (15) durch einen mitbewegbaren Oberstempel (27) erfolgt.

4. Verfahren nach einem der Ansprüche 1 bis 3, dadurch gekennzeichnet, daß mindestens ein weiteres bewegbares Teil (16, 17) der Formhohlraumwandung (6) auf ein vorgegebenes, jedoch niedrigeres Niveau plaziert wird als das erste Teil (15) und, nachdem das erste Teil (15) einen vorbestimmten Weg zurückgelegt hat, der Bezug (5) am zweiten Teil (16, 17) fixiert wird und daß dieses zweite Teil (16, 17) dann ebenfalls in die formgebende Position gefahren wird.

5. Verfahren nach einem der Ansprüche 1 bis 4, dadurch gekennzeichnet, daß die Bewegungsgeschwindigkeit mindestens eines der Teile (15, 16, 17) gesteuert wird.

6. Verfahren nach einem der Ansprüche 1 bis 4, dadurch gekennzeichnet, daß die Bewegung mindestens eines der Teile (15, 16, 17) kurzzeitig unterbrochen wird.

7. Vakuumformwerkzeug zum Herstellen eines mit einem textilen Bezug (5) versehenen Polsters, insbesondere Fahrzeugsitzpolsters, durch Hinterschäumen, bestehend aus einem den Formhohlraum (1) zumindest teilweise enthaltenden Vakuumformwerkzeugteil (2), wobei der Formhohlraum (1) der Kontur des zu fertigenden Polsters entspricht, eine perforierte Wandung (6) aufweist und an eine Vakuumquelle (11) anschließbar ist, und wobei dem den Formhohlraum (1) umgebenden Rand (3) ein Spannrahmen (4) zugeordnet ist, dadurch gekennzeichnet, daß ein Teil (15) der Wandung (6) des Formhohlraumes (1) aus mindestens einem zur Oberfläche des Vakuumformwerkzeugteils (2) hin bewegbaren Teil (15, 16, 17) besteht, welchem eine Fixiervorrichtung (26, 34, 35) zugeordnet ist.

8. Vakuumformwerkzeug nach Anspruch 7, dadurch gekennzeichnet, daß die Fixiervorrichtung (34, 35) aus einer Perforation (36) des bewegbaren Teils (16, 17) mit Anschluß (38) an eine Vakuumquelle (11) besteht.

9. Vakuumformwerkzeug nach einem der Ansprüche 7 und 8, dadurch gekennzeichnet, daß die Fixiervorrichtung (26) aus einem mit dem bewegbaren Teil (15) mitbewegbaren Oberstempel (27) besteht.

10. Vakuumformwerkzeug nach einem der Ansprüche 7 bis 9, gekennzeichnet durch ein Programmsteuergerät (25) für Bewegungsablauf und Fixierung.

## Claims

1. A process for production by back-foaming of a cushion, especially a vehicle seat cushion, provided with a textile cover (5), whereby the cover (5) is laid onto the rim (3) of a vacuum mould part (2) at least partly containing a mould cavity (1) and stretched before vacuum is applied to the mould cavity (1) and the cover (5) is sucked in and positioned, and subsequently a foam-forming reaction mixture is charged to the back of the cover (5) and after curing of the reaction mixture to the plastic core of the cushion is removed from the mould, characterized in that before application of the vacuum to the mould cavity (1), the cover (5) during its positioning over the mould cavity (1) is brought into contact with at least one movable part (15, 16, 17) of the wall (6) of the mould cavity (1), is fixed to this part (15, 16, 17) and then this part (15, 16, 17) with the cover (5) fixed thereto is moved into the moulding position, at which time, at the latest, vacuum is now applied to the mould cavity (1).

2. A process according to Claim 1, characterized in that the cover (5) is fixed to the movable part (16, 17) by vacuum.

3. A process according to Claim 1, characterized in that the cover (5) is fixed to the movable part (15) by a top force (27) that can be moved in association with the movable part (15).

4. A process according to one of Claims 1 to 3, characterized in that at least one further movable part (16, 17) of the mould cavity wall (6) is placed at a predetermined level that is, however, lower than the first part (15) and, after the first part (15) has travelled a predetermined distance, the cover (5) is fixed to the second part (16, 17), and this second part (16, 17) is then moved likewise into the moulding position.

5. A process according to one of Claims 1 to 4, characterized in that the rate of movement of at least one of the parts (15, 16, 17) is controlled.

6. A process according to one of Claims 1 to 4, characterized in that the movement of at least one of the parts (15, 16, 17) is briefly interrupted.

7. A vacuum mould for production by back-foaming of a cushion, especially a vehicle seat cushion, provided with a textile cover (5), consisting of a vacuum mould part (2) at least partly containing the mould cavity (1), the mould cavity (1) corresponding to the outline of the cushion to be produced, having a perforated wall (6) and being connectable to a vacuum source (11), and a stretching frame (4) being associated with the rim (3) surrounding the mould cavity (1), characterized in that a part (15) of the wall (6) of the mould cavity (1) consists of at least one part (15, 16, 17) that is movable towards the surface of the vacuum mould part (2) and with which a fixing device (26, 34, 35) is associated.

8. A vacuum mould according to Claim 7, characterized in that the fixing device (34, 35) consists of a perforation (36) of the movable part (16, 17) with connection (38) to a vacuum source (11).

9. A vacuum mould according to one of Claims 7 and 8, characterized in that the fixing device (26) consists of a top force (27) that is movable in association with the movable part (15).

10. A vacuum mould according to one of Claims 7 to 9, characterized by a program control device (25) for the sequence of movements and fixing.

**Revendications**

1. Procédé de fabrication d'un coussin comportant un revêtement textile (5), en particulier d'un coussin de siège de véhicule, par formation de mousse sur le revers, le revêtement (5) étant posé et tendu sur le bord (3) d'une partie (2) d'outil de moulage sous vide, qui comprend au moins une partie de la cavité de moulage (1), avant que cette cavité de moulage (1) soit mise sous vide et que le revêtement (5) soit aspiré et positionné, et ensuite un mélange réactionnel formateur de mousse étant déversé sur le revers du revêtement (5) et le coussin étant démoulé après le durcissement du mélange réactionnel jusqu'au coeur de la mousse, caractérisé en ce que, avant que la cavité de moulage (1) soit mise sous vide, le revêtement (5) est mis en contact avec au moins une pièce mobile (15, 16, 17) de la cloison (6) de la cavité (1) de moulage lors de son positionnement sur cette cavité (1), il est fixé sur cette pièce (15, 16, 17) et ensuite la pièce (15, 16, 17) ainsi que le revêtement (5) fixé sur elle sont amenés à la position de modelage, la cavité de moulage (1) étant mise sous vide au plus tard à ce moment.

2. Procédé selon la revendication 1, caractérisé en ce que la fixation du revêtement (5) sur la pièce mobile (16, 17) est effectuée par le vide.

3. Procédé selon la revendication 1, caractérisé en ce que la fixation du revêtement (5) sur la pièce mobile (15) est produite par un poinçon supérieur (27) déplaçable avec cette dernière.

4. Procédé selon l'une des revendications 1 à 3, caractérisé en ce qu'au moins une autre pièce mobile (16, 17) de la cloison (6) de la cavité de moulage est placée à un niveau prédéterminé, mais inférieur à celui de la première pièce (15) et, après que la première pièce (15) a effectué une course de recul prédéterminée, le revêtement (5) est fixé sur la seconde pièce (16, 17), et en ce que cette seconde pièce (16, 17) est également amenée à la position de modelage.

5. Procédé selon l'une des revendications 1 à 4, caractérisé en ce que la vitesse du mouvement d'au moins l'une des pièces (15, 16, 17) est commandée.

6. Procédé selon l'une des revendications 1 à 4, caractérisé en ce que le mouvement d'au moins l'une des pièces (15, 16, 17) est brièvement interrompu.

7. Outil de moulage sous vide pour la fabrication d'un coussin comportant un revêtement textile (5), en particulier d'un coussin de siège de véhicule, par formation de mousse sur le revers, se composant d'une partie (2) d'outil de moulage sous vide comprenant au moins une partie de la cavité de moulage (1), la cavité de moulage (1) correspondant au contour du coussin à fabriquer, comportant une cloison perforée (6) et pouvant être raccordée à une source de dépression (11) et un cadre de fixation (4) étant associé au bord (3) entourant la cavité de moulage (1), caractérisé en ce qu'une partie (15) de la cloison (6) de la cavité de moulage (1) se compose d'au moins une pièce (15, 16, 17) qui est mobile vers la surface de la partie (2) de l'outil de moulage sous vide et à laquelle est associé un dispositif de fixation (26, 34, 35).

8. Outil de moulage sous vide selon la revendication 7, caractérisé en ce que le dispositif de fixation (34, 35) se compose d'une perforation (36) de la pièce mobile (16, 17) et d'un raccord (38) de cette perforation à une source de dépression (11).

9. Outil de moulage sous vide selon l'une des revendications 7 et 8, caractérisé en ce que le dispositif de fixation (26) se compose d'un poinçon supérieur (27) mobile conjointement avec la pièce mobile (15).

10. Outil de moulage sous vide selon l'une des revendications 7 à 9, caractérisé par un appareil de commande (25) à programmation du déroulement des mouvements et de la fixation.

FIG. 1

FIG. 2